(19) Europäisches Patentamt
European Patent Office
Office européen des brevets

(11) **EP 3 230 813 B1**

(12) **EUROPÄISCHE PATENTSCHRIFT**

(45) Veröffentlichungstag und Bekanntmachung des Hinweises auf die Patenterteilung:
**08.05.2019  Patentblatt 2019/19**

(51) Int Cl.:
**G05B 23/02** *(2006.01)*   **G05B 17/02** *(2006.01)*

(21) Anmeldenummer: **15797279.5**

(22) Anmeldetag: **11.11.2015**

(86) Internationale Anmeldenummer:
**PCT/EP2015/076292**

(87) Internationale Veröffentlichungsnummer:
**WO 2016/091518 (16.06.2016 Gazette 2016/24)**

(54) **VERFAHREN ZUR IDENTIFIKATION EINER KENNLINIE**

METHOD FOR IDENTIFYING A CHARACTERISTIC CURVE

PROCÉDÉ D'IDENTIFICATION D'UNE COURBE CARACTÉRISTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **08.12.2014  DE 102014225147**

(43) Veröffentlichungstag der Anmeldung:
**18.10.2017  Patentblatt 2017/42**

(73) Patentinhaber: **Robert Bosch GmbH**
**70442 Stuttgart (DE)**

(72) Erfinder:
• **TRACHTE, Adrian**
  **70193 Stuttgart (DE)**

• **WAGNER, Alexandre**
  **70435 Stuttgart (DE)**
• **WEGSCHEIDER, Martin**
  **89077 Ulm (DE)**
• **PASSENBERG, Carolina**
  **71277 Rutesheim (DE)**

(74) Vertreter: **Thürer, Andreas**
**Bosch Rexroth AG**
**BR/IPR**
**Zum Eisengiesser 1**
**97816 Lohr am Main (DE)**

(56) Entgegenhaltungen:
**EP-A2- 2 221 699     DE-A1-102006 006 821**
**US-A1- 2004 193 357**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft ein Verfahren zur Identifikation einer Kennlinie, die einen stationären Zusammenhang eines Ein-/Ausgangsverhaltens darstellt, gemäß dem Oberbegriff des Patentanspruchs 1. Die Erfindung betrifft des Weiteren ein Computerprogrammprodukt.

Stand der Technik

Bei der Kennlinie handelt es sich vorzugsweise um eine elektroproportionale Kennlinie einer Hydraulikmaschine. Bei der Hydraulikmaschine handelt es sich vorzugsweise um eine Axialkolbenmaschine in Schrägscheibenbauart mit einer Schrägscheibe, die auch als Schwenkwiege bezeichnet wird. Zur Anpassung eines Fördervolumenstroms der Hydraulikmaschine kann ein Schwenkwinkel der Schrägscheibe oder Schwenkwiege verstellt werden. Die Erfindung betrifft insbesondere die Verstellung und/oder Regelung des Schwenkwinkels der Axialkolbenmaschine. Die deutsche Offenlegungsschrift DE 10 2006 006 821 A1 offenbart ein Verfahren zur Begrenzung der Überschusskraft eines fremdkraftbetätigten Schließteils einer Verstellvorrichtung, bei dem ein Einklemmschutzsystem während eines Verstellvorgangs zumindest innerhalb eines Teilbereichs des Verstellweges jeweils in vorgegebenen Positionen des Schließteils aktuelle Verstellkraftwerte ermittelt und diese mit Verstellkraft-Vergleichswerten vergleicht, welche in einer Speichereinrichtung bereit gehalten werden, wobei zumindest einer dieser gespeicherten Verstellkraft-Vergleichswerte an mechanische Gegebenheiten der Verstelleinrichtung adaptiert wird und das Ausmaß dieser Adaption in Abhängigkeit der Nutzungsdauer vorgegeben wird.

Offenbarung der Erfindung

Aufgabe der Erfindung ist es, die Qualität einer Kennlinie, die einen stationären Zusammenhang eines Ein-/Ausgangsverhaltens darstellt, zu verbessern.

Die Aufgabe ist durch ein Verfahren gemäß Patentanspruch 1 gelöst. Bei der Kennlinie handelt es sich vorzugsweise um eine elektroproportionale Kennlinie einer Hydraulikmaschine, insbesondere einer Axialkolbenmaschine. Die elektroproportionale Kennlinie wird auch als EP-Kennlinie bezeichnet. Bei einer sogenannten elektroproportionalen Verstellung, die auch als EP-Verstellung bezeichnet wird, handelt es sich vorzugsweise um die Verstellung eines Schwenkwinkels einer Axialkolbenmaschine in Schrägscheibenbauweise. Aufgrund von Bauteiltoleranzen unterscheidet sich die EP-Kennlinie von verschiedenen hydraulischen Einheiten. Darüber hinaus verändert sich die EP-Kennlinie durch Alterungseffekte über die Laufzeit einer hydraulischen Einheit. Durch das erfindungsgemäße Verfahren werden verschiedene Maßnahmen bereitgestellt, wie die EP-Kennlinie auf einfache Art und Weise korrigiert und/oder adaptiert werden kann. Ableitungen der Ein- und Ausgänge werden berechnet und gefiltert. Zu diesem Zweck werden die Ein- und Ausgänge zum Beispiel einem Zustandsvariablenfilter zugeführt.

Ein bevorzugtes Ausführungsbeispiel des Verfahrens ist dadurch gekennzeichnet, dass bestimmt wird, ob ein aktueller Wertebereich und/oder ein aktueller Zustand für eine Adaption oder Korrektur gültig und/oder geeignet sind/ist. Zu diesem Zweck kann eine Aktivierung vorgeschaltet werden, welche die Qualität der aktuellen Werte beurteilt und die Korrektur beziehungsweise Adaption gegebenenfalls deaktiviert. Dadurch kann verhindert werden, dass in schlecht identifizierten oder ungültigen Bereichen eine Adaption oder Korrektur erfolgt.

Ein weiteres bevorzugtes Ausführungsbeispiel des Verfahrens ist dadurch gekennzeichnet, dass die Adaption oder Korrektur der Kennlinie mit einer Kompensation einer in den Ein- und/oder Ausgängen enthaltenen Dynamik kombiniert wird. Zur Kompensation einer in den Signalen enthaltenen Dynamik kann ein zuvor identifiziertes Modell verwendet werden.

Ein weiteres bevorzugtes Ausführungsbeispiel des Verfahrens ist dadurch gekennzeichnet, dass die Ausgänge mit konstanten Segmenten identifiziert werden. Zu diesem Zweck kann beispielsweise ein gleitender Mittelwert aus vergangenen Messwerten gebildet werden. Um Speicherplatz zu sparen, kann die Realisierung über eine rekursive Formulierung sinnvoll sein.

Ein weiteres bevorzugtes Ausführungsbeispiel des Verfahrens ist dadurch gekennzeichnet, dass die Ausgänge mit linearen Segmenten identifiziert werden. Durch die Identifizierung mit linearen Segmenten kann eine höhere Genauigkeit erreicht werden. Es können auch Polynome höherer Ordnung verwendet werden.

Ein weiteres bevorzugtes Ausführungsbeispiel des Verfahrens ist dadurch gekennzeichnet, dass die Kennlinie eine elektroproportionale Kennlinie für die Verstellung und/oder Regelung einer Axialkolbenmaschine in Schrägscheibenbauweise ist. Die Verstellung einer Schrägscheibe der Axialkolbenmaschine erfolgt vorzugsweise über einen Volumenstrom in einen Verstellzylinder, der über eine Ventileinrichtung, insbesondere ein Magnetventil, gestellt wird.

Ein weiteres bevorzugtes Ausführungsbeispiel des Verfahrens ist dadurch gekennzeichnet, dass die aktuellen Ein- und Ausgänge im Betrieb der Axialkolbenmaschine gemessen werden. Die Messung der aktuellen Ein- und Ausgänge erfolgt zum Beispiel mit Hilfe von geeigneten Sensoren, die an der Axialkolbenmaschine angebracht sind. Wenn die Eingänge oder Stellgrößen bekannt sind, müssen diese nicht gemessen werden.

Ein weiteres bevorzugtes Ausführungsbeispiel des Verfahrens ist dadurch gekennzeichnet, dass als Eingang eine Spannung oder ein Strom oder eine Magnetkraft und als Ausgang ein Schwenkwinkel verwendet werden. Die Spannung kann direkt als Eingangsgröße verwendet werden. Bei dem Strom handelt es sich vorzugsweise um einen Strom, der durch Anlegen einer Spannung an eine elektromagnetische Spule eines Magnetventils erzeugt wird. Bei der Magnetkraft handelt es sich vorzugsweise um eine Kraft, die zum Verstellen auf das Magnetventil aufgebracht wird. Die Magnetkraft wird durch Anlegen der Spannung beziehungsweise Bestromen der elektromagnetischen Spule erzeugt.

Die Erfindung betrifft gegebenenfalls auch eine Hydraulikmaschine, insbesondere eine Axialkolbenmaschine, deren EP-Kennlinie mit Hilfe des erfindungsgemäßen Verfahrens korrigiert beziehungsweise adaptiert wird.

Die Erfindung betrifft gegebenenfalls auch einen Hydraulikantrieb mit mindestens einer derartigen Hydraulikmaschine, insbesondere Axialkolbenmaschine. In Kombination mit einem hydrostatischen Fahrantrieb wird die Hydraulikmaschine, insbesondere die Axialkolbenmaschine, auch als Hydrostat bezeichnet. Ein hydrostatischer Fahrantrieb umfasst vorzugsweise einen primärseitigen und einen sekundärseitigen Hydrostaten. Die elektroproportionalen Kennlinien beider Hydrostaten können mit dem erfindungsgemäßen Verfahren vorteilhaft korrigiert beziehungsweise adaptiert werden.

Die Erfindung betrifft des Weiteren ein Computerprogrammprodukt mit einem Computerprogramm, das Softwaremittel zum Durchführen des vorab beschriebenen Verfahrens aufweist, wenn das Computerprogramm auf einem Computer ausgeführt wird. Das erfindungsgemäße Verfahren wird vorzugsweise in einem Steuergerät eines Kraftfahrzeugs ausgeführt. Bei dem Kraftfahrzeug kann es sich um ein Nutzfahrzeug handeln. Daher betrifft die Erfindung gegebenenfalls auch ein Steuergerät eines Kraftfahrzeugs mit einem derartigen Computerprogrammprodukt.

Die Erfindung kann allgemein für die Schwenkwinkelverstellung von Hydraulikmaschinen, insbesondere von beliebigen Axialkolbenmaschinen, in Schrägscheibenbauweise mit EP-Verstellung genutzt werden. Eine bevorzugte beispielhafte Anwendung ist die Nutzung für Fahrzeuge mit teilweiser oder vollständiger hydraulischer Leistungsübertragung über Axialkolbenmaschinen.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind.

Kurze Beschreibung der Zeichnung

Es zeigen:

Figur 1 ein Ersatzschaltbild für eine elektroproportionale Verstellung einer Axialkolbenmaschine in Schrägscheibenbauweise;

Figur 2 ein Blockschaltbild einer adaptiven Kennlinie, vereinfacht für ein dynamisches System erster Ordnung dargestellt;

Figur 3 zwei kartesische Koordinatendiagramme mit jeweils einer identifizierten Kennlinie mit konstanten Segmenten (linke Seite) und linearen Segmenten (rechte Seite);

Figur 4 ein Hammersteinmodell für den Zusammenhang zwischen Magnetkraft und Schwenkwinkel;

Figur 5 zwei kartesische Koordinatendiagramme mit einem Zeitverlauf der Kennlinien-Identifikation und

Figur 6 einen Ausschnitt aus der identifizierten Kennlinie inklusive der für die Identifikation verwendeten Teilgraden.

Beschreibung der Ausführungsbeispiele

Die Erfindung betrifft insbesondere als Axialkolbenmaschinen ausgeführte Hydraulikmaschinen. Die Axialkolbenmaschinen sind zum Beispiel in einem stationären oder mobilen Hydraulikantrieb angeordnet. Der mobile Hydraulikantrieb ist vorzugsweise Teil eines Hydraulikhybridantriebsstrangs, insbesondere eines Kraftfahrzeugs, das primär durch eine Verbrennungskraftmaschine angetrieben wird.

Eine Axialkolbenmaschine kann in einem offenen Kreislauf oder in einem geschlossenen Kreislauf betrieben werden. Bei dem offenen Kreislauf fließt ein Hydraulikmedium wie Hydrauliköl, das auch als Druckflüssigkeit bezeichnet wird, von einem Tank zur Axialkolbenmaschine und wird von dort über eine Ventileinrichtung zu einem Verbraucher gefördert.

Vom Verbraucher fließt das Hydraulikmedium über die Ventileinrichtung zum Tank zurück. In dem geschlossenen Kreislauf fließt das Hydraulikmedium von der Axialkolbenmaschine zum Verbraucher und von dort direkt zurück zur Axialkolbenmaschine. Dabei gibt es eine Hochdruckseite und eine Niederdruckseite, die je nach Belastung wechselt.

Wenn die Axialkolbenmaschine über eine Antriebswelle mechanisch angetrieben wird, dann arbeitet die Axialkolbenmaschine als Axialkolbenpumpe. Wenn die Axialkolbenmaschine hydraulisch angetrieben wird, dann arbeitet die Axialkolbenmaschine als Axialkolbenmotor. Die Axialkolbenmaschine kann nur als Motor oder nur als Pumpe betrieben werden. Die Axialkolbenmaschine kann prinzipiell aber auch im Wechsel sowohl als Pumpe als auch als Motor betrieben werden.

Durch eine Schwenkwiege, die auch als Schrägscheibe bezeichnet wird, kann ein von der Axialkolbenmaschine geförderter Volumenstrom stufenlos verstellt werden. Für eine Anpassung des Fördervolumenstroms der Axialkolbenmaschine kann der Winkel der Schrägscheibe oder Schwenkwiege verstellt werden. Dies kann zum Beispiel über eine elektroproportionale Schwenkwinkelverstellung (EP-Verstellung) geschehen.

Bei der EP-Verstellung wird mittels des Ansteuerstroms eines Proportional-Wegeventils der Schwenkwinkel der Schrägscheibe oder Schwenkwiege vorgegeben. Das Proportional-Wegeventil stellt im Volumenstrom den Druck in einem Verstellzylinder der Axialkolbenmaschine ein. Der Schwenkwinkel der Schrägscheibe wird mechanisch über eine Feder auf das Proportional-Wegeventil zurückgeführt.

Dadurch ergibt sich ein Schwenkwinkel, der im Wesentlichen proportional zum Ansteuerstrom ist und durch die mechanische Rückführung innerhalb eines Regelbereichs gehalten wird. Durch diese mechanische Regeleinrichtung entsteht ein direkter Zusammenhang zwischen dem Schwenkwinkel der Axialkolbenmaschine und dem Ansteuerstrom des Proportional-Wegeventils. Dieser Zusammenhang wird durch eine EP-Kennlinie beschrieben.

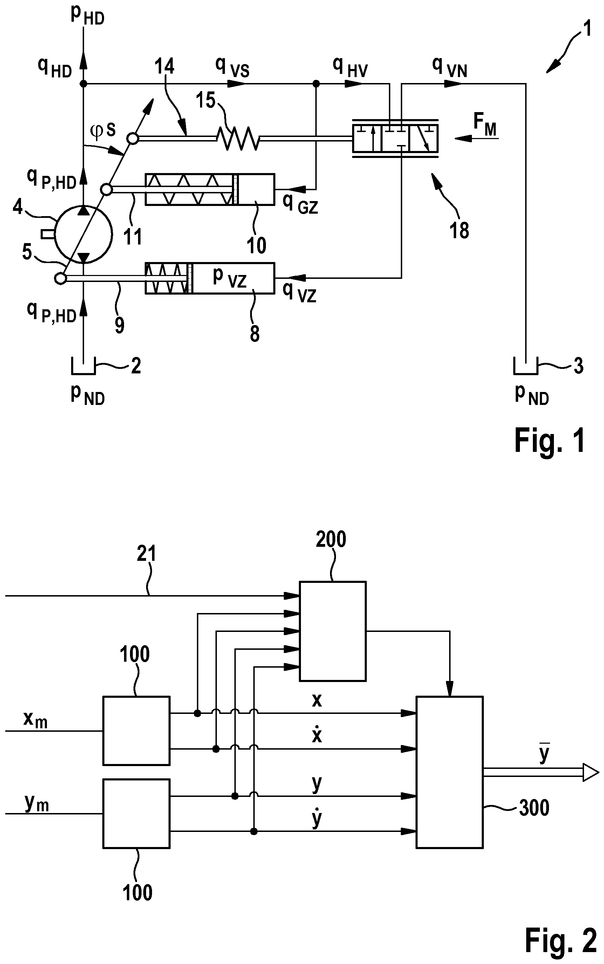

In Figur 1 ist ein Hydrauliksystem 1 mit einem Reservoir 2, 3 für Hydraulikmedium dargestellt. Eine Hydraulikmaschine 4 dient zum Beispiel zum Antrieb eines (nicht dargestellten) hydrostatischen Fahrantriebs. Die Hydraulikmaschine 4 ist als Axialkolbenmaschine in Schrägscheibenbauweise mit einer Schrägscheibe oder Schwenkwiege 5 ausgeführt.

Die Schwenkwiege 5 kann durch einen Stellzylinder 8 mit einem Stellkolben verstellt werden, der über einen Stellkolbenstange 9 mit der Schwenkwiege 5 gekoppelt ist. Ein Gegenzylinder 10 umfasst einen Gegenkolben, der über eine Gegenkolbenstange 11 ebenfalls mit der Schwenkwiege 5 gekoppelt ist. Darüber hinaus ist die Schwenkwiege 5 über eine Kopplungseinrichtung 14 mit einer Feder 15 steuerungsmäßig mit einer Ventileinrichtung 18 verbunden.

Die Ventileinrichtung 18 ist als Proportionalventil oder Stetigventil mit drei Anschlüssen und drei Schaltstellungen oder Zwischenstellungen ausgeführt. Der Buchstabe $p$ wird verwendet, um einen Druck zu bezeichnen. Der Buchstabe $q$ wird verwendet, um einen Volumenstrom zu bezeichnen. Die Buchstaben $VZ$ bezeichnen den Verstellzylinder 8. Die Buchstaben $GZ$ bezeichnen den Gegenzylinder 10. Die Großbuchstaben $ND$ stehen für den Niederdruck. Die Großbuchstaben $HD$ stehen für den Hochdruck.

Die Ventileinrichtung 18 wird durch eine Magnetkraft $F_m$ betätigt. Daher wird die Ventileinrichtung 18 auch als Magnetventil bezeichnet.

Figur 1 zeigt ein Ersatzschaltbild für die Elektro-Proportionale (EP) Verstellung der Axialkolbenmaschine 4 in Schrägscheibenbauweise. Die Verstellung der Schwenkwiege, Schwenkscheibe oder Schrägscheibe 5 erfolgt über den Volumenstrom $q_{VZ}$ in den Verstellzylinder 8, welcher über das Magnetventil 18 und die Magnetkraft $F_m$ gestellt wird. Der Druck $p_{VZ}$ im Verstellzylinder 8 erzeugt ein Moment auf die Schwenkscheibe 5. Für die Rückstellung der Schwenkscheibe 5 wirkt das Moment des Gegenzylinders 10 der mit Hochdruckseite verbunden ist entgegen dem Moment des Verstellzylinders. Schwenkscheibe 5 und Magnetventil 18 sind über die Rückstellfeder 15 verbunden. Dieser mechanische Regelkreis führt dazu, dass die Schwenkscheibenposition idealerweise proportional der Magnetkraft ist und wird deswegen EP-Verstellung genannt. Tatsächlich ist dieser Zusammenhang aber nur annähernd proportional weswegen dieser Zusammenhang von Magnetkraft und Schwenkwinkel zur Ansteuerung oft über eine Kennlinie beschrieben wird. Da die Abhängigkeit der Magnetkraft vom Strom üblicherweise ebenfalls über eine Kennlinie beschrieben wird kann zur Ansteuerung auch eine zusammengefasste Kennlinie von Strom auf Schwenkwinkel verwendet werden. Diese Kennlinie wird im Folgenden allgemein als EP-Kennlinie bezeichnet.

Da die EP-Kennlinie sich aufgrund Bauteiltoleranzen zwischen verschiedenen hydraulischen Einheiten unterscheidet und sich diese durch Alterungseffekte über die Laufzeit hinweg verändert, wird die Kennlinie während des Betriebes gemäß einem wesentlichen Aspekt der Erfindung adaptiert beziehungsweise korrigiert werden.

Das erfindungsgemäße Verfahren identifiziert den stationären Zusammenhang eines Ein-/Ausgangsverhalten. Es ordnet dazu in jedem Zeitschritt das Wertepaar des aktuellen Ein- und Ausgangs einem Segment in der Kennlinie zu. Es werden dann der aktuelle Ausgang mit dem in der Kennlinie gespeicherten Ausgang verglichen und dieser geeignet korrigiert. Zur Kompensation der in den Signalen enthaltenen Dynamik wird ein zuvor identifiziertes Modell verwendet. Um zu verhindern, dass die Adaption in schlecht identifizierbaren oder ungültigen Bereichen arbeitet, wird eine Aktivierung vorgeschaltet welche die Qualität der aktuellen Werte beurteilt und die Korrektur gegebenenfalls deaktiviert.

Für die Identifikation der EP-Kennlinie sind je nach Anwendung verschiedene Ein-/Ausgangspaarungen sinnvoll. Es können zum Beispiel die gemessenen Größen Strom und Schwenkwinkel oder Magnetkraft und Schwenkwinkel verwendet werden. Soll durch die EP-Kennlinie der Zusammenhang von Magnetkraft auf Schwenkwinkel beschrieben werden, so kann ein zusätzliches Kennfeld von Strom auf Magnetkraft vorgeschaltet werden. Falls dieses Kennfeld fehlerbehaftet ist oder sich über die Laufzeit ändert, so werden diese Abweichungen ebenfalls durch die Adaption der EP-Kennlinie korrigiert. Sollen weitere stationäre Abweichungen zum Beispiel in einer unterlagerten Stromregelung oder -steuerung durch die adaptive EP-Kennlinie kompensiert werden, kann anstatt des gemessenen Stroms auch der Sollstrom für die Adaption verwendet werden. Wird das Kennfeld für die Ansteuerung verwendet, ist es sinnvoll, direkt das inverse Kennfeld von Schwenkwinkel auf Strom zu identifizieren. Da das entwickelte Verfahren allgemein auf beliebige Paarungen angewendet werden kann, wird im Folgenden verallgemeinert von einem Eingang $x$ und einem Ausgang $y$ gesprochen.

Das Verfahren unterteilt sich in drei wesentliche Bestandteile:

1. Filterung und Berechnung der Ableitungen von $x$ und $y$
2. Bestimmung ob Wertebereich und Zustand für die Adaption gültig sind
3. Adaption der Kennlinie und gegebenenfalls Kompensation der Dynamik.

In Figur 2 ist ein Blockschaltbild der Funktion, vereinfacht mit einer Dynamik 1. Ordnung, dargestellt. Zwei Rechtecke 100 symbolisieren Zustandsvariablenfilter. Ein Rechteck 200 symbolisiert eine Aktivierung. Ein Rechteck 300 symbolisiert eine Kennlinienadaption.

Die Filterung und Berechnung der Ableitungen der (indirekt) gemessenen Größen $x_m$ und $y_m$ kann beispiels-weise über Zustandsvariablenfilter 100 erfolgen. In die Aktivierung 200 gehen die gefilterten Größen sowie ein externer Zustand ein, wie durch einen Pfeil 21 angedeutet ist. Über den externen Zustand kann die Adaption deaktiviert werden zum Beispiel für den Fall, dass Sensorik ausgefallen ist oder sich das System in einem für die Adaption ungültigen Zustand befindet. Durch die Einbeziehung der gefilterten Größen kann der Identifikationsraum verkleinert werden. So können zum Beispiel nur quasistationäre Werte zugelassen werden oder verhindert werden, dass in Phasen, in denen sich die Maschine im Anschlag oder in der Haftreibung befindet, identifiziert wird. Bei der tatsächlichen Adaption 300 wird gegebenenfalls die Dynamik aus den vorhandenen Signalen heraus gerechnet und anschließend eine Zuordnung des korrigierten Wertepaares ($x_m$ Schlange, $y_m$Schlange) zu der nächstliegenden Stützstelle $x_i$ vorgenommen. Ist $\Delta x$ der Abstand zwischen zwei Stützstellen so liegt $x_m$Schlange im Bereich

$$x_i - \frac{\Delta x}{2} < \tilde{x}_\mathrm{m} < x_i + \frac{\Delta x}{2}.$$

Der zugehörige $y_i$-Wert wird dann mit dem aktuellen Wert $y_m$Schlange verglichen und geeignet korrigiert. Für den Verlauf der zu identifizierenden Funktion $y = f(x)$ im Bereich der Stützstellen $x_i$ können verschiedene Stützfunktionen angenommen werden.

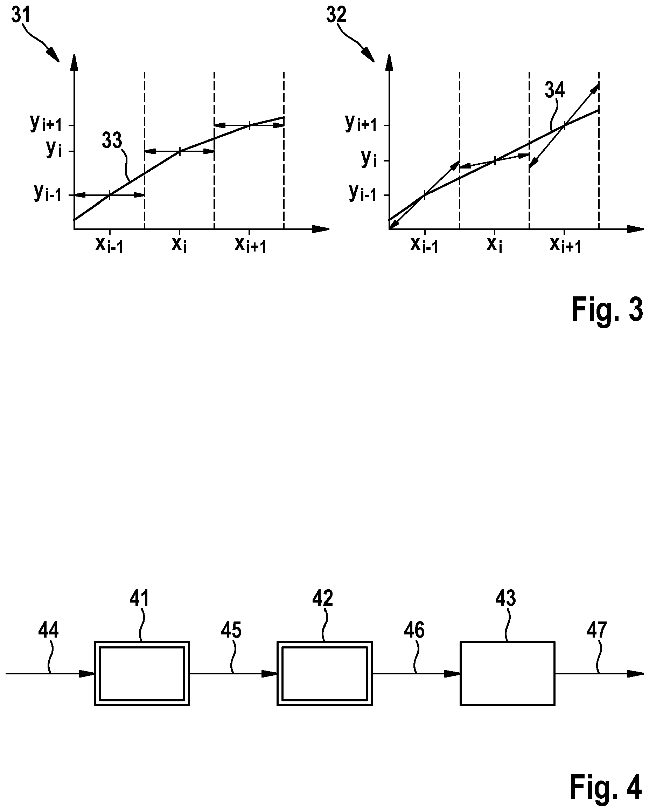

Im Folgenden werden die in Figur 3 dargestellten zwei wesentlichen Möglichkeiten mit konstanten Teilsegmenten und Geraden erläutert. Prinzipiell ist es mit dem Verfahren jedoch möglich beliebige Stützfunktionen zu identifizieren die sich aus einer Multiplikation eines Parametervektors und den Messgrößen ergibt.

Im einfachsten Fall werden die y-Werte mit konstanten Segmenten identifiziert, wie auf der linken Seite in Figur 3 mit Hilfe eines kartesischen Koordinatendiagramms 31 mit einer identifizierenden Kennlinie 33 gezeigt ist. Hierfür kann beispielsweise ein gleitender Mittelwert aus vergangenen Messwerten gebildet werden. Um Speicherplatz zu sparen ist eine Realisierung über eine rekursive Formulierung sinnvoll. Für eine Mittelwertberechnung mit exponentieller Ge-wichtung kann ein diskretes $PT_1$-Filter in der folgenden Form verwendet werden:

$$y_{i,k} = \lambda y_{i,k-1} + (1 - \lambda)y_m \qquad (1)$$

Darin ist $0 < \lambda < 1$ der Vergessensfaktor für welchen mit $\Delta t$ als Abtastzeit folgender Zusammenhang zu einer Zeitkonstanten $T$ gilt

$$\lambda = \mathrm{e}^{-\frac{\Delta t}{T}} \qquad (2)$$

Alternativ kann auch eine Mittelwertberechnung über einen rekursiven leastsquares (RLS) Filter geschehen, wie in Gleichung (4) beschrieben mit

$$u_{\mathrm{k}} = 1 \ \text{und} \ \Theta_i = \begin{bmatrix} \theta_1 \end{bmatrix}$$

als Mittelwert.

Eine höhere Genauigkeit kann durch die Identifizierung von linearen Segmenten erreicht werden, wie auf der rechten Seite in Figur 3 mit Hilfe eines kartesischen Koordinatendiagramms 32 mit einer identifizierten Kennlinie 34 gezeigt ist. Es gilt dann ein linearer Zusammenhang zwischen der Stützstelle $x_i$ und dem Ausgangswert $y_i$

$$y_i = \theta_{i,1} x_i + \theta_{i,2} \qquad (3)$$

mit der Steigung $\theta_{i,1}$ und dem y-Achsenabschnitt $\theta_{i,2}$. Für die Identifikation der Geradengleichung mit dem Parametervektor $\Theta_i = [\theta_{i,1} \ \theta_{i,2}]^{\mathsf{T}}$ wird ein rekursives leastsquares Filter verwendet. Eine mögliche Implementierung ist im Folgenden beschrieben

$$
\begin{aligned}
w_{\mathrm{k}} &= y_{i,\mathrm{k}} = y_m \,, \\
u_{\mathrm{k}} &= \begin{bmatrix} x_{i,\mathrm{k}} & 1 \end{bmatrix}^{\mathrm{T}} \,, \\
P_{i,\mathrm{k}} &= \frac{1}{\lambda} \left( P_{i,\mathrm{k}-1} - \frac{P_{i,\mathrm{k}-1}\, u_{\mathrm{k}}\, u_{\mathrm{k}}^{\mathrm{T}} P_{i,\mathrm{k}-1}}{\lambda + u_{\mathrm{k}}^{\mathrm{T}} P_{i,\mathrm{k}-1}\, u_{\mathrm{k}}} \right) \,, \\
e_{\mathrm{k}} &= w_{\mathrm{k}} - u_{\mathrm{k}}^{\mathrm{T}} \Theta_{\mathrm{k}-1} \,, \\
\Theta_{i,\mathrm{k}} &= \Theta_{i,\mathrm{k}-1} + \frac{P_{i,\mathrm{k}-1}\, u_k}{\lambda + u_{\mathrm{k}}^{\mathrm{T}} P_{i,\mathrm{k}-1}\, u_{\mathrm{k}}} e_{\mathrm{k}} \,.
\end{aligned}
\qquad (4)
$$

Darin ist $0 < \lambda < 1$ der Vergessensfaktor und $P$ die Kovarianzmatrix. Für die Initialisierung müssen geeignete Anfangswerte für $P_0$ und $\Theta_0$ gewählt werden. Ist eine nominelle Kennlinie bekannt, so sollte diese für die Festlegung der Parameter $\Theta_0$ verwendet werden. Über die Wahl der initialen Kovarianzmatrix $P_0$ wird die Qualität der nominellen Kennlinie festgelegt.

Das Verfahren zur Identifikation einer Kennlinie soll am Beispiel der Schwenkwinkelregelung einer Axialkolbenmaschine in Schrägscheibenbauweise gezeigt werden. Es soll dabei der stationäre Zusammenhang zwischen Magnetkraft und Schwenkwinkel identifiziert werden. Das Schwenkwinkelverhalten kann als Hammerstein-Modell beschrieben werden, wie es in Figur 4 dargestellt ist. Das Hammersteinmodell ist in Figur 4 mit Hilfe von drei Rechtecken 41, 42 und 43 sowie vier Pfeilen 44, 45, 46, 47 veranschaulicht. Der Pfeil 44 symbolisiert das Zuführen eines Stroms *I*. Das Rechteck 41 enthält die Funktion *F = g(I)*. Der Pfeil 45 steht für: *x = F*. Das Rechteck 42 steht für: *y = f(x)*. Der Pfeil 46 steht für: $y = \alpha_d$. Das Rechteck 43 steht für die Anwendung eines $PT_1$-Modells. Der Pfeil 47 steht für den Schwenkwinkel $\alpha$. Die Magnetkraft *F* und der Schwenkwinkel $\alpha$ stehen in einem stationären Zusammenhang der durch die Funktion *f* beschrieben wird. Gemessen wird jedoch nicht die Magnetkraft sondern der Strom *I* der durch die Magnetspule fließt. Der Zusammenhang zwischen Strom *I* und Magnetkraft *F* wird durch die Funktion *g* beschrieben und vorab vermessen und in einem Kennfeld hinterlegt. Natürlich ist es auch möglich, wie vorab beschrieben, die beiden Kennfelder zusammen zu fassen und direkt ein Kennfeld für die Abbildung von *I* auf $\alpha_d$ zu identifizieren. Die Schwenkwinkeldynamik vom Sollschwenkwinkel $\alpha_d$ auf den Istschwenkwinkel $\alpha$ kann vereinfacht über ein $PT_1$-Modell beschrieben werden.

Eine Möglichkeit zur Identifikation einer Kennlinie und Approximation der Funktion *f* von Magnetkraft *F* auf den Sollschwenkwinkel $\alpha_d$ ist diese nur im quasistationären durchzuführen also wenn $\alpha_d = \alpha$ gilt. Dafür muss, zum Beispiel über die Signalableitungen, festgestellt werden ob eine gültige Identifikation möglich ist und diese entsprechend aktiviert oder deaktiviert werden, wie beispielsweise in Figur 2 Block 200 dargestellt ist. Ist die Dynamik von $\alpha_d$ auf $\alpha$ bekannt, so kann über das Modell von dem Messwert $\alpha$ und dessen Ableitungen auf den Eingangswert zurück gerechnet werden. In dem genannten Beispiel gilt:

$$\alpha_{\mathrm{d}} = T\dot{\alpha} + \alpha \, . \qquad\qquad (5)$$

Ist die Kennlinie bijektiv, kann diese in beide Richtungen identifiziert werden. Soll z.B. der stationäre Zusammenhang zwischen Magnetkraft $F$ und SollSchwenkwinkel $\alpha_d$ für eine Vorsteuerung des Schwenkwinkels verwendet werden kann auch direkt die inverse Kennlinie

$$x = f^{-1}(y) = F = f^{-1}(\alpha_{\mathrm{d}})$$

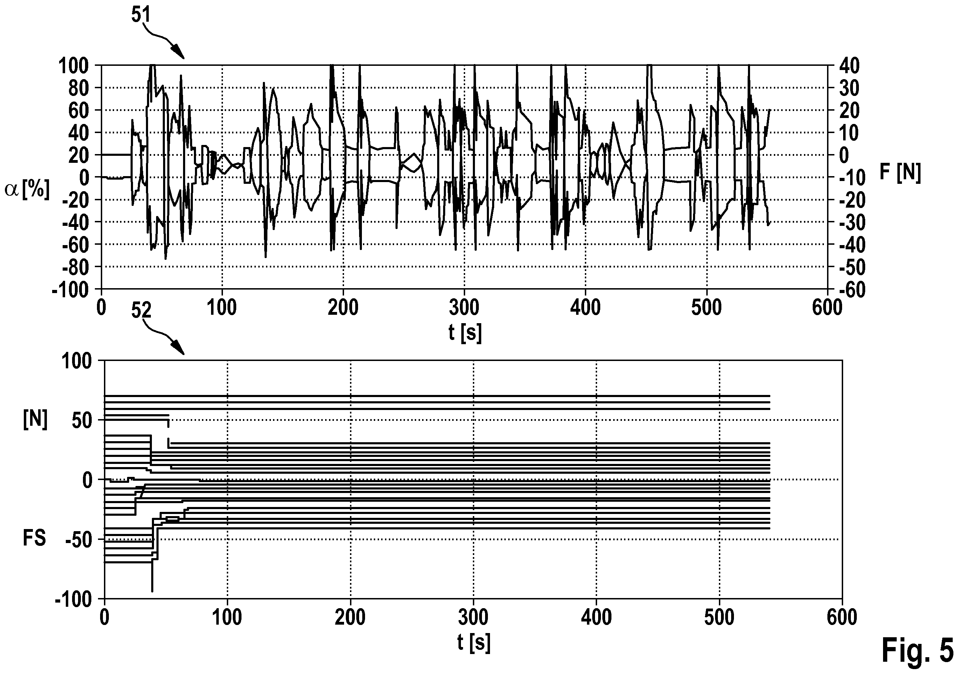

identifiziert werden. Ein Zeitverlauf einer solchen Identifikation ist in Abbildung 5 zu sehen. In der oberen Grafik sind die Zeitverläufe des Schwenkwinkels $\alpha$ und der Magnetkraft $F$ dargestellt. Es ist ersichtlich, dass es sich um einen annähernd umgekehrt proportionaler Zusammenhang zwischen Schwenkwinkel und Magnetkraft handelt. Aus den Verläufen werden wie oben beschrieben, für eine feste Rasterung in den Stützstellen $\alpha_d$, die zugehörigen Magnetkraftwerte identifiziert. Der Zeitverlauf der einzelnen Stützwerte ist in der unteren Grafik dargestellt. Es wurde bewusst eine große Abweichung für die initialen Stützwerte angenommen um die Konvergenz der Identifikation besser beurteilen zu können. Die Identifikation der einzelnen Stützwerte ist nur möglich wenn sich der Schwenkwinkel im Bereich der zugehörigen Stützstelle bewegt. Es findet deswegen keine Identifikation der oberen drei Stützwerte statt, da diese zu Schwenkwinkeln kleiner -80 % gehören die in dem gezeigten Messschrieb nicht angefahren werden.
In Figur 5 sind zwei kartesische Koordinatendiagramme 51, 52 übereinander dargestellt. Auf einer linken y-Achse des Koordinatendiagramms 51 ist der Schwenkwinkel $\alpha$ in Prozent aufgetragen. Auf einer rechten y-Achse des Koordinatendiagramms 51 ist die Magnetkraft $F$ in Newton aufgetragen. Auf den x-Achsen der beiden Koordinatendiagrammen 51, 52 ist die Zeit t in Sekunden aufgetragen. Auf der y-Achse des Koordinatendiagramms 52 ist ein Stützwert FS für die Magnetkraft in Newton aufgetragen.

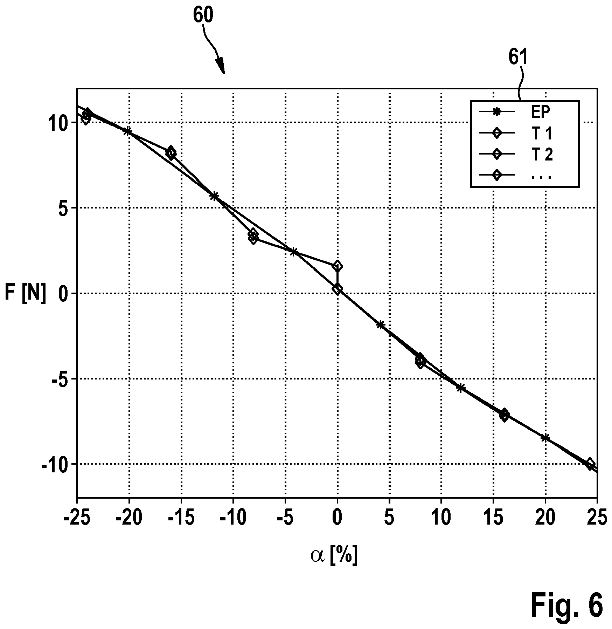

In Figur 6 ist ein kartesisches Koordinatendiagramm 60 mit einem Ausschnitt aus der identifizierten Kennlinie inklusive der für die Identifikation verwendeten Teilgraden dargestellt. In einem Rechteck 61 ist in dem Koordinatendiagramm 60 die Legende zu der EP-Kennlinie EP sowie zu Teilgraden T1, T2 und so weiter gezeigt.
In Figur 6 ist die identifizierte Kennlinie

$$F = f^{-1}(\alpha_{\mathrm{d}})$$

am Ende der in Figur 5 gezeigten Identifikation gezeigt. Die Funktion der adaptiven EP-Kennlinie kann durch die gezielte Vertrimmung der EP-Kennlinie (z.B. durch Austausch der Magneten) in Kombination mit dem Ansteuersignal und dem Schwenkwinkelverhalten nachgewiesen werden.

**Patentansprüche**

1. Verfahren zur Identifikation einer Kennlinie (33,34), die einen stationären Zusammenhang eines Ein-/Ausgangsverhaltens darstellt, wobei in Zeitschritten ein Wertepaar eines aktuellen Ein- und Ausgangs einem Segment in der Kennlinie (33,34) zugeordnet wird, wobei der aktuelle Ausgang mit einem in der Kennlinie gespeicherten Ausgang verglichen wird, wobei der in der Kennlinie (33,34) gespeicherte Ausgang korrigiert beziehungsweise adaptiert wird, **dadurch gekennzeichnet, dass** Ableitungen der Ein- und Ausgänge berechnet und gefiltert werden.

2. Verfahren nach Anspruch 1, **dadurch gekennzeichnet, dass** bestimmt wird, ob ein aktueller Wertebereich und/oder ein aktueller Zustand für eine Adaption oder Korrektur gültig und/oder geeignet sind.

3. Verfahren nach einem der vorhergehenden Ansprüche, **dadurch gekennzeichnet, dass** die Adaption oder Korrektur der Kennlinie mit einer Kompensation einer in den Ein- und/oder Ausgängen enthaltenen Dynamik kombiniert wird.

4. Verfahren nach einem der vorhergehenden Ansprüche, **dadurch gekennzeichnet, dass** die Ausgänge mit konstanten Segmenten identifiziert werden (31, in Figur 3).

5. Verfahren nach einem der vorhergehenden Ansprüche, **dadurch gekennzeichnet, dass** die Ausgänge mit linearen Segmenten identifiziert werden (32 in Figur 3).

**6.** Verfahren nach einem der vorhergehenden Ansprüche, **dadurch gekennzeichnet, dass** die Kennlinie eine elektroproportionale Kennlinie (EP) für die Verstellung und/oder Regelung einer Axialkolbenmaschine (4) in Schrägscheibenbauweise ist.

**7.** Verfahren nach Anspruch 6, **dadurch gekennzeichnet, dass** die aktuellen Ein- und Ausgänge im Betrieb der Axialkolbenmaschine (4) gemessen werden.

**8.** Verfahren nach einem der vorhergehenden Ansprüche, **dadurch gekennzeichnet, dass** als Eingang eine Spannung oder ein Strom oder eine Magnetkraft und als Ausgang ein Schwenkwinkel verwendet werden.

**9.** Computerprogrammprodukt mit einem Computerprogramm, das Softwaremittel zum Durchführen des Verfahrens nach einem der vorhergehenden Ansprüche aufweist, wenn das Computerprogramm auf einem Computer ausgeführt wird.

**Claims**

**1.** Method for identifying a characteristic curve (33, 34) representing a steady-state relationship of an input/output behaviour, wherein, at intervals of time, a pair of values of an input and output at the particular time is assigned to a segment in the characteristic curve (33, 34), wherein the output at the particular time is compared with an output that is stored in the characteristic curve and wherein the output that is stored in the characteristic curve (33, 34) is corrected or adapted, **characterized in that** derivatives of the inputs and outputs are calculated and filtered.

**2.** Method according to Claim 1, **characterized in that** it is determined whether a range of values at a particular time and/or a state at a particular time is/are valid and/or suitable for an adaptation or correction.

**3.** Method according to one of the preceding claims, **characterized in that** the adaptation or correction of the characteristic curve is combined with a compensation for dynamics contained in the inputs and/or inputs.

**4.** Method according to one of the preceding claims, **characterized in that** the outputs with constant segments are identified (31, in Figure 3).

**5.** Method according to one of the preceding claims, **characterized in that** the outputs with linear segments are identified (32 in Figure 3).

**6.** Method according to one of the preceding claims, **characterized in that** the characteristic curve is an electroproportional characteristic curve (EP) for the adjustment and/or control of an axial piston machine (4) of a swashplate design.

**7.** Method according to Claim 6, **characterized in that** the inputs and outputs at a particular time are measured during the operation of the axial piston machine (4).

**8.** Method according to one of the preceding claims, **characterized in that** a voltage or a current or a magnetic force is used as the input and a swash angle is used as the output.

**9.** Computer program product comprising a computer program that has software means for carrying out the method according to one of the preceding claims when the computer program is run on a computer.

**Revendications**

**1.** Procédé d'identification d'une courbe caractéristique (33, 34) qui représente une relation stationnaire d'un comportement d'entrée/sortie, dans lequel une paire de valeurs d'une entrée et d'une sortie actuelles est associée selon certains pas de temps à un segment de la courbe caractéristique (33, 34), dans lequel la sortie actuelle est comparée à une sortie stockée dans la courbe caractéristique, dans lequel la sortie stockée dans la courbe caractéristique (33, 34) est corrigée ou adaptée, **caractérisé en ce que** des dérivées des entrées et des sorties sont calculées et filtrées.

2. Procédé selon la revendication 1, **caractérisé en ce qu'**il est déterminé si une plage de valeurs actuelles et/ou un état actuel sont valides et/ou appropriés pour une adaptation ou une correction.

3. Procédé selon l'une des revendications précédentes, **caractérisé en ce que** l'adaptation ou la correction de la courbe caractéristique est combinée avec une compensation d'une dynamique contenue dans les entrées et/ou les sorties.

4. Procédé selon l'une des revendications précédentes, **caractérisé en ce que** les sorties sont identifiées par des segments constants (31, sur la figure 3) .

5. Procédé selon l'une des revendications précédentes, **caractérisé en ce que** les sorties sont identifiées par des segments linéaires (32 sur la figure 3) .

6. Procédé selon l'une des revendications précédentes, **caractérisé en ce que** la courbe caractéristique est une courbe caractéristique électroproportionnelle (EP) pour le réglage et/ou la régulation d'une machine à piston axial (4) en forme de plateau en biais.

7. Procédé selon la revendication 6, **caractérisé en ce que** les entrées et les sorties actuelles sont mesurées pendant le fonctionnement de la machine à piston axial (4) .

8. Procédé selon l'une des revendications précédentes, **caractérisé en ce qu'**une tension ou un courant ou une force magnétique sont utilisés en tant qu'entrée et **en ce qu'**un angle de pivotement est utilisé en tant que sortie.

9. Produit de programme d'ordinateur comprenant un programme d'ordinateur présentant des moyens logiciels permettant de mettre en oeuvre le procédé selon l'une des revendications précédentes lorsque le programme d'ordinateur est exécuté sur un ordinateur.

$p_{HD}$

$q_{HD}$    14    $q_{VS}$    $q_{HV}$    $q_{VN}$    1

15

$\varphi_S$

$q_{P,HD}$    $F_M$

4

5    11    $q_{GZ}$    18

10

$p_{VZ}$    $q_{VZ}$

$q_{P,HD}$    9    8

2    3

$p_{ND}$    $p_{ND}$

**Fig. 1**

21    200

100

$x_m$    x

$\dot{x}$

$y$

$y_m$    $\bar{y}$

$\dot{y}$    300

100

**Fig. 2**

Fig. 3

Fig. 4

Fig. 5

EP 3 230 813 B1

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006006821 A1